(19) Europäisches Patentamt
European Patent Office
Office européen des brevets

(11) EP 1 347 321 A2

(12) **EUROPEAN PATENT APPLICATION**

(43) Date of publication:
24.09.2003 Bulletin 2003/39

(51) Int Cl.⁷: $G02B\ 6/255$

(21) Application number: 03006489.3

(22) Date of filing: 21.03.2003

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: 22.03.2002 JP 2002080075

(71) Applicant: **Sumitomo Electric Industries, Ltd.**
**Osaka-shi, Osaka 541-0041 (JP)**

(72) Inventors:
• **Yamada, Eiichiro,**
**Sumitomo Electric Industries Ltd**
**Yokohama-shi, Kanagawa (JP)**

• **Saito, Kazuhito,**
**Sumitomo Electric Industries Ltd**
**Yokohama-shi, Kanagawa (JP)**
• **Tamura, Mitsuaki,**
**Sumitomo Electric Industries Ltd**
**Yokohama-shi, Kanagawa (JP)**

(74) Representative: **Grünecker, Kinkeldey,**
**Stockmair & Schwanhäusser Anwaltssozietät**
**Maximilianstrasse 58**
**80538 München (DE)**

(54) **Method of splicing optical fibers and multi-fiber component**

(57) Provided are a method of splicing together multiple fibers having different mode field diameters (MFDs) en bloc at a low splicing loss and a multi-fiber component incorporating the fibers thus spliced. After a fusion-splicing operation has been conducted, additional heat treatment is applied to the portion of the fibers thus fusion-spliced so that a dopant contained in the core portions of the fibers is thermally diffused so as to cause the MFDs thereof to match each other. The multiple fibers are disposed in parallel in line. During the fusion-splicing operation, one or both of pairs of fibers (11a and 11b) are pushed toward the other to face each other, and the fibers are pulled back in the opposite direction to decrease diameter increment created in fusion spliced portions, and then additional heat treatment by electric heater or gas burner (19) is applied to the fusion-spliced portions (16), at the TEC treatment region (20).

FIG. 1A1

EP 1 347 321 A2

FIG. 1B1

FIG. 1C1

FIG. 1D1

FIG. 1B2

**Description**

BACKGROUND OF THE INVENTION

Field of the Invention

The present invention relates to a splicing method of optical fibers in which after the fusion splicing thereof their mode field diameters (MFDs) are modified by heat treatment to match each other, and also relates to an optical component incorporating the optical fibers spliced according to the splicing method.

Description of the Background Art

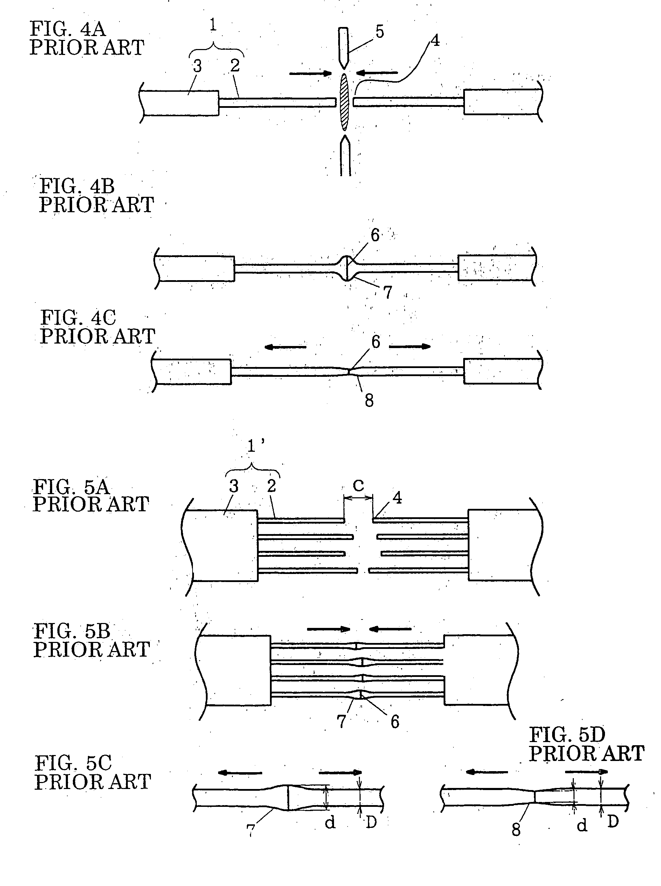

In optical communication systems, there have recently been cases where single mode fibers (SMFs) doped with Germanium oxide ($GeO_2$) must be connected to an optical component such as a planar optical waveguide having a different mode field diameter (MFD) from that of the SMFs. In those cases, an optical component is first spliced to an optical fiber having approximately the same MFD as that of the component, and then the fiber is spliced to the SMF having an ordinary MFD, usually 10 $\mu$m.
When optical fibers having different MFDs are spliced together, it is difficult to obtain a practically acceptable splicing loss simply by connecting them together with the fusion splicing method. In Japanese Patent No. 2618500 and Japanese Patent Application Publication No. 2000-275470, Thermally-diffused Expanded Core (TEC) method is disclosed as a method to solve such problem. By the TEC treatment, a MFD can be increased locally such that MFDs at the spliced ends of fibers match each other, and splicing loss can be decreased accordingly.
In many cases for connecting an optical component and optical fibers, plural optical fibers densely disposed are connected to the optical component. In such cases, when optical fibers having MFDs different from each other are connected, a plurality of optical fibers disposed in parallel in line are fusion-spliced en bloc, and subsequently, the TEC treatment is applied to them.

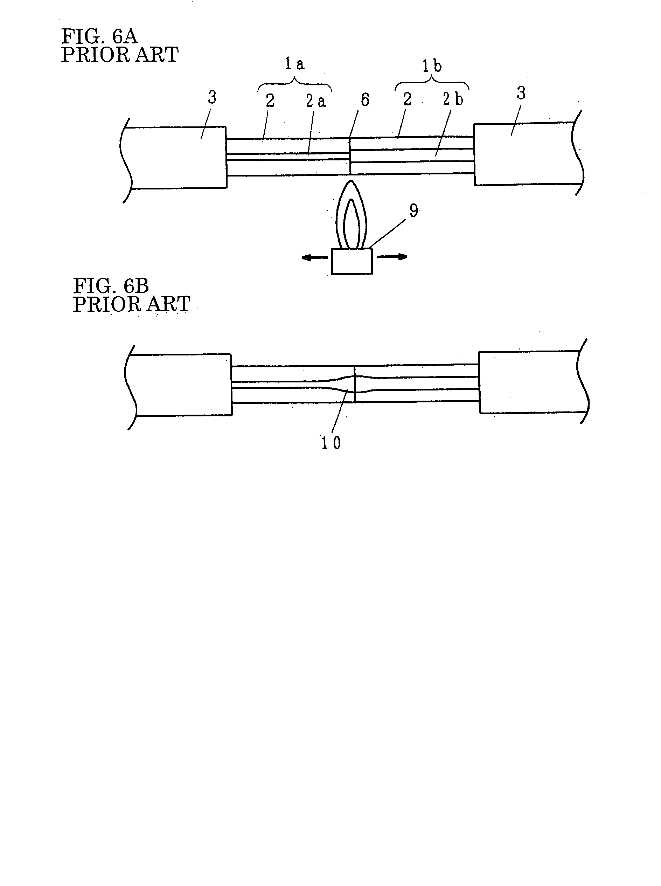

Figures 6A and 6B explain the TEC treatment. In these two figures, while optical fibers 1a and 1b which are to be connected to each other have the same outer diameter as a bare fiber portion 1, they have different MFDs and different relative reflective indices thereof in the core portions 2a and 2b. A coating portion of the optical fibers is denoted as 3. The optical fibers 1a and 1b are connected by fusion splicing. After their end faces for splicing are disposed to face each other, they are fused by arc discharge, they are abutted together to be fusion spliced. Such a simple fusion splicing results in causing a large splicing loss, since there is a discontinuity of connection, due to the difference of MFDs between the core portions 2a and 2b in a fusion spliced portion 6 as shown in Fig. 6A.
To improve such discontinuity, TEC treatment is conducted such that a fusion-spliced portion 6 is heated additionally by a micro-torch or burner as shown in Fig. 6A. This additional heating is performed under temperature and time conditions that cause a dopant, which is added into the core portions 2a and 2b in order to increase the refractive index, to thermally diffuse toward the cladding portions without fusing the optical fibers 1a and 1b. By this heating, a dopant contained in the core portions 2a and 2b is thermally diffused and MFDs of the core portions 2a and 2b in the spliced portion 6 are expanded so as to obtain a smooth splicing form as the expanded portion 10 in Fig. 6B.
In the optical fiber 1a having a smaller MFD and a higher dopant concentration, more amount of a dopant is thermally diffused than in the optical fiber 16 having a larger MFD and a lower dopant concentration. Thus, the MFD in the optical fiber 1a is expanded considerably more in a tapered shape than that of the optical fiber 1b and the discontinuity of the MFDs is lessened accordingly. In such a fusion-splicing of optical fibers having different MFDs, it has been clarified that the splicing loss can be reduced by TEC treatment in which the smaller MFD in one fiber is brought near the larger MFD of the other fiber.
In another known method for decreasing a splicing loss, a pair of optical fibers having the same MFD are pulled back in the opposite direction to decrease the diameter increment at the spliced portion after having pushed one or both of the fibers toward the other. Further, according to a method disclosed in Japanese Patent No. 2572978 for decreasing the splicing loss of the spliced end, multiple fibers of the same kind are pulled back to the opposite direction after the multiple fibers have been pushed toward each other and fusion-spliced.
Figures 4A to 4C and 5A to 5C show methods of decreasing a diameter increment of the above-mentioned spliced end. Figures 4A to 4C shows examples of splicing fibers and Figs. 5A to 5D shows those of multiple fibers.
As shown in Fig. 4A, bare glass fibers 2 are exposed by removing the coating portion 3 of a pair of optical fibers 1 to be spliced together, and the splicing end 4 of each fiber is disposed to face that of other fiber at a predetermined space between them. Then the splicing ends 4 of both fibers 1 are heated and fused by arc discharge from an electrode 5. If each optical fiber 1 is pushed toward the other fiber and then fusion-spliced, there is produced a thick portion 7 at a junction 6, as shown in Fig. 4B. While the junction 6 is still softened due to high temperature, one or both of the fibers are pulled back to the opposite direction, and thereby the diameter of the thick portion 7 is decreased to produce a thin portion 8 as shown in Fig. 4C.

As shown in Fig. 5A, the coating portions 3 of pairs of multiple fibers 1' are removed at and near splicing ends 4 to expose bare fiber portions 2 and the splicing ends 4 of the multiple fibers 1' are disposed to face one another. However, it would be difficult to locate the splicing ends 4 precisely at a uniform array, and the space 'c' between the splicing ends of each pair of the fibers would differ among pairs. In such a state, the splicing ends 4 are heated and fused by an arc discharge or the like, and then spliced as shown in Fig. 5B by pushing one or both pairs of the multiple fibers 1' toward the opposing multiple fibers by a predetermined length, respectively.

If the spaces 'c' between the end faces of pairs of the fibers are different, the pushing amount of each pair of optical fibers is not equal to the others, which results in different diameter increment of the thick portions 7 at the junctions 6 among the pairs of fibers. When both of the pair of fibers are pulled back in the opposite direction thereafter, in some cases there is created a thick portion 7 as shown in Fig. 5C, and in other cases a thin portion 8 is created as shown in Fig. 5D. Therefore, splicing losses of all fiber pairs cannot necessarily be suppressed within the range not exceeding a predetermined value.

The above Patent No. 2572978 discloses that the splicing loss can be suppressed to not more than 0.1 dB by making the ratio d/D (the ratio of the outer diameter 'd' of the thick portion 7 or thin portion 8 to the outer diameter of the bare fiber 'D') to be 0.95 to 1.18. Also disclosed therein is that the fibers are pulled back upon fusion splicing thereof for a time determined beforehand by the relation between the above d/D ratio and pulling-back time. However, the technology disclosed in the above prior art is for splicing single mode fibers having the same MFD, and no disclosure is made on splicing optical fibers having different MFDs.

Further, in Japanese Patent No. 3149194, a method of reducing splicing loss is disclosed, in which the fusion-spliced portion of fibers having different MFDs are elongated so that the diameter of the bare fiber is reduced so as to obtain a reduced splicing loss. According to the method disclosed, MFDs coincide by reducing the outer diameter of the bare fibers without applying the TEC treatment. Here, the splicing loss of two splicing portions is from 3.8 dB before the elongation to 0.5 dB after the elongation. While it is a considerable improvement of the splicing loss, 0.5 dB cannot be said to be a low splicing loss. The splicing loss of $GeO_2$ doped SMFs is desirably not more than 0.1 dB. Further, in splicing multiple fibers en bloc, scattering of the pushing amount is unavoidable, and so it is difficult to reduce the splicing loss to not more than 0.1 dB by this method.

SUMMARY OF THE INVENTION

The object of the present invention is to provide a method of splicing optical fibers at a low splicing loss and an optical component incorporating the fibers thus spliced at low loss.

To attain the above object, a new splicing method for optical fibers having different MFDs is provided. In this method, optical fibers having different MFDs are fusion-spliced, and additional heat treatment is applied to the fusion-spliced portion such that a dopant contained in the core portion is thermally diffused so as to cause the MFDs of the fibers to coincide each other. In this method, pairs of opposing fibers disposed in parallel in line or in the form of a ribbon are pushed in a longitudinal direction from one or both sides of the pairs toward the opposed fibers at the time of fusion-splicing, and then pulled back in the opposite direction to decrease the diameter increment in the fusion-spliced portions, which are subsequently subjected to the additional heat treatment. Here, the diameter increment 'f' is a quantity obtained by the following:

$$f = \text{(outer diameter of the junction of the fibers after the heat treatment)}$$

$$- \text{(outer diameter of the bare optical fiber)}.$$

Further, a new multi-fiber component is provided. This multi-fiber component includes optical fibers having different MFDs which are fusion-spliced and the spliced portion is subjected to additional heat treatment such that a dopant contained in the core portion is thermally diffused, thereby causing the MFDs of the optical fibers to coincide, wherein the diameter increment of the spliced portion after the additional heating is not more than 11 μm

The present invention is further explained below by referring to the accompanying drawings. The drawings are provided solely for the purpose of illustration and are not intended to limit the scope of the invention.

BRIEF DESCRIPTION OF THE DRAWING

Figures 1A1 to 1D2 are figures explaining embodiments of the present invention. Figures 1A1 to 1D1 are front views and Figs. 1A2 to 1D2 are side views.

Figures 2A and 2B are figures explaining the definition of diameter increment 'f', and Fig. 2C is a graph showing the relation between diameter increment and splicing loss after TEC treatment.

Figures 3A to 3F are figures showing embodiments of multi-fiber components of the present invention.

Figures 4A to 4C are figures explaining a method of decreasing the diameter increment at the spliced portion of a single optical fiber by a fusion-splicing method.

Figures 5A to 5D are figures explaining a method of decreasing the diameter increment at the spliced portions of multiple fibers by fusion-splicing.

Figures 6A and 6B are figures explaining TEC treatment.

## DETAILED DESCRIPTION OF THE INVENTION

Embodiments of the present invention are explained below by referring to the accompanying drawings. In the drawings, the same number refers to the same part to avoid duplicate explanation. The ratios of the dimensions in the drawings do not necessarily coincide with the explanation. Values of MFD are at the wavelength of 1.55$\mu$m.

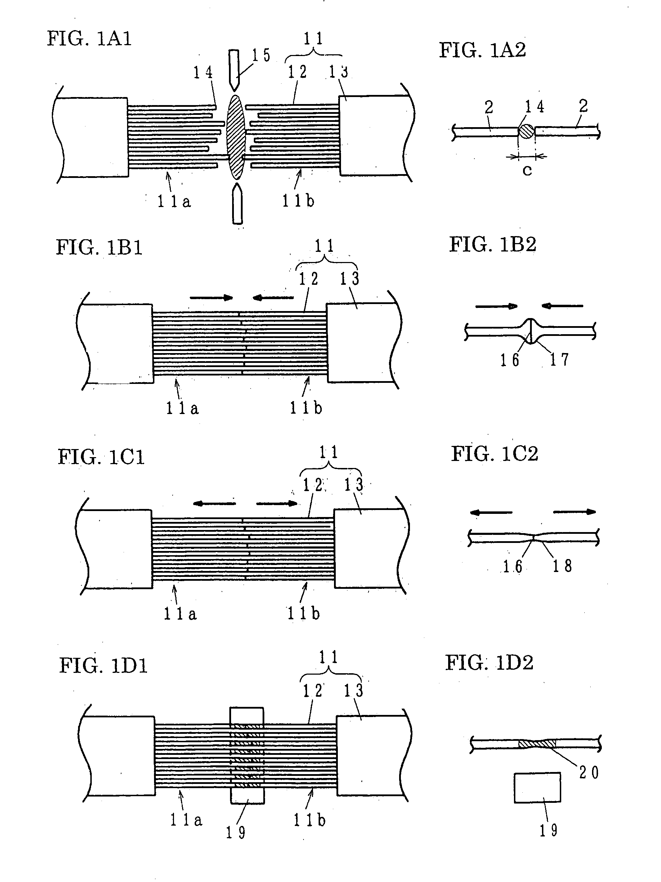

One embodiment of the present invention is explained using Figs. 1A1 to 1D2. Figures 1A1 to 1D2 are front views, and Figs. 1A2 to 1D2 are side views. Multi-fiber ribbons 11 comprise a plurality of optical fibers that are disposed in parallel in line. Each of multiple fibers 11a on one side of splicing pairs has an MFD of approximately 5 $\mu$m in a core portion of a bare fiber section 12. Multiple fiber 11b on the other side consist of GeO$_2$ doped single mode fibers (SMFs) having an MFD of approximately 10 $\mu$m in a core portion of a bare fiber section 12, respectively.

As shown in Figs. 1A1 and 1A2, a fiber coating portion 13 is removed at the splicing end portions of the multiple fibers 11a and 11b having different MFDs, so that a bare fiber 12 is exposed, respectively. Splicing ends 14 of the bare fiber portions 12 are cut to predetermined lengths. However, it is difficult to cut the multiple fibers 11 to precisely uniform lengths, and so there occurs dispersion in terms of space 'c' between the splicing end faces. Under such situation, splicing ends 14 of the multiple fibers 11a and 11b are heated and fused by arc discharge from an electrode 15 or the like.

Subsequently, one or both pairs of the multiple optical fibers 11a and 11b are pushed toward the other, as shown in Figs. 1B1 and 1B2, and the splicing ends 14 are fusion-spliced. By this pushing, a thick portion 17 is produced in a splicing portion 16. The diameter increment in the thick portion 17 is larger if the space 'c' between the splicing ends is smaller and the pushing amount larger, and is smaller if the space 'c' is larger and the pushing amount smaller. The diameter increment in the thick portion affects the splicing loss decrement by the TEC treatment that is subsequently conducted. Therefore, it is necessary to limit the increment to a predetermined value.

According to the present invention, in order to suppress the diameter increment within a predetermined value, the multiple fibers are, subsequent to the pushing operation, pulled back in the opposite direction by a predetermined length as shown in Figs. 1C1 and 1C2. As this pulling-back operation is conducted while the fusion-spliced portion 16 is softened at high temperature, it is possible to decrease the diameter of the thick portion 17, or to produce a thin portion 18, the outer diameter of which is smaller than that of the bare fiber 12.

After the thick portion 17 of the fusion-spliced portion 16 has been adjusted by the pulling-back operation to a predetermined diameter increment, an additional heating for TEC treatment is conducted, as shown in Figs. 1D1 and 1D2. The additional heating is conducted by using an electric heater or a gas burner 19. All of the multiple fibers 11 are heated uniformly at a TEC treatment region 20 for a pre-determined time. With this additional heat treatment, a dopant contained in the core portion of the fibers is thermally diffused to the cladding portion so that different MFDs of the multiple fiber 11a and 11b coincide at the spliced-portion thereof and thereby the splicing loss can be substantially reduced.

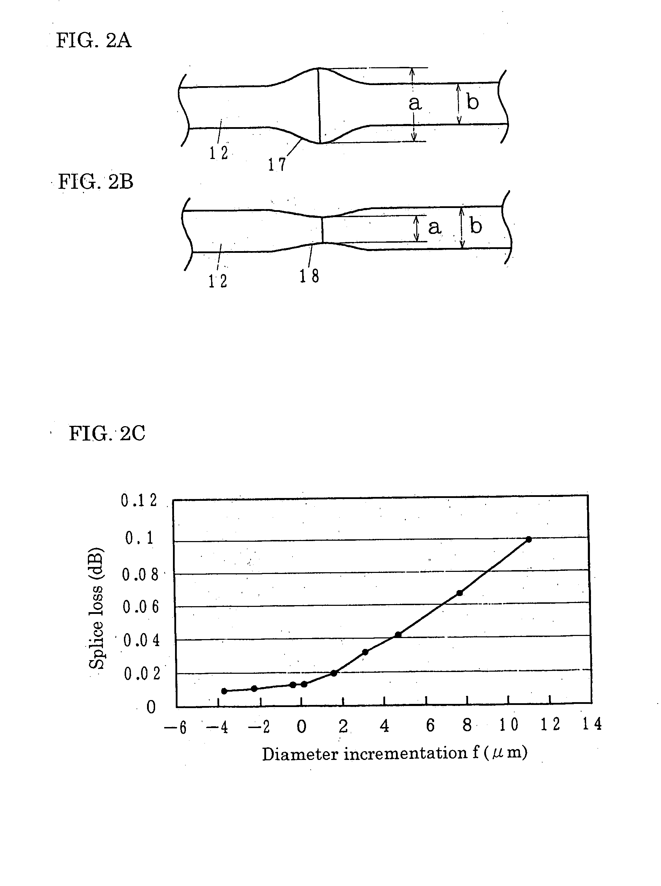

Figures 2A and 2B are figures for explaining the definition of diameter increment, and Fig. 2C is a graph showing the relation between diameter increment and splicing loss after TEC treatment.

A diameter increment 'f' is defined as follows:

$$f = a - b,$$

where 'a' is a diameter of the junction of the fibers after the heat treatment, and 'b' is diameter of bare fiber as shown in Figs. 2A and 2B.

Figure 2C is a graph showing the relation between the diameter increment and splicing loss after TEC treatment, when fusion-splicing is done between two optical fibers having MFDs of 4 $\mu$m and 10 $\mu$m, respectively, and both having the outer diameter of bare fiber of 125 $\mu$m. Figure 2C shows that it is necessary to limit the diameter increment to not more than 11 $\mu$m, in order to obtain an after-TEC-treatment splicing loss of not more than 0.1 dB, which is usually required for the splicing of SMFs. Further, it also shows it is necessary to make the diameter increment not more than 5 µm, in order to obtain a more desirable splicing loss of not more than 0.05 dB after the TEC treatment. The smaller the diameter increment is, the more easily it can be inserted into an optical connector ferrule; however, as a connector ferrule has a clearance relative to optical fibers, it is not always necessary for the diameter increment to be zero.

However, it has become clear that a decreasing curve of the splicing loss levels off at the time when the diameter increment turns minus. Therefore, the excess pulling-back operation after the fusion-splicing is senseless and only causes a deterioration of the fiber strength. For example, if the diameter increment becomes -20.5 µm, the cross section of the portion having such diameter increment (decrement in this case) becomes not more than 70% of the cross section corresponding to the initial outer diameter of 125 µm. Then, in order to maintain the required fiber strength according to our experience, it is desirable to make the diameter increment not less than -20 µm. In the case when higher strength is required for the fibers, it is more desirable to conduct the pulling-back operation such that the diameter increment is not less than - 6 µm. With the diameter increment of not more than -6.5 µm, the cross section of the fiber including the increment becomes not more than 90% of the cross section corresponding to the initial outer diameter of 125 µm.

From the above result, it was confirmed that the smaller diameter increment after the TEC treatment enables a lower splicing loss, and decreasing the diameter increment by the pulling-back operation is effective at the time of the fusion splicing. However, it is desirable to minimize the pulling-back operation for decreasing the diameter increment, and to adjust different MFDs for uniformity by applying the TEC treatment to the fusion-spliced portion.

About 10 µm dispersion is unavoidable for cutting lengths of bare fibers contained in the multiple fiber s by the present state of art, If such fibers are fusion-spliced en bloc, there arises a dispersion of pushing amount, approximately 20 µm at maximum, which creates the dispersion in diameter increment of approximately 6 µm. However, in the en bloc fusion-splicing of multiple fibers having different MFDs, even if the dispersion of the diameter increment is 4 to 10 µm among fibers after the TEC treatment, the splicing loss after the TEC treatment is 0.04 to 0.1 dB, which is not more than 0.1 dB. If the diameter increment of each fiber is -3 µm to 3 µm, the splicing loss after TEC treatment is 0.01 to 0.035 dB, which is not more than 0.05 dB.

As is clear from the above explanation, in the fusion-splicing of multiple fiber s en bloc, whose MFDs are different, matching of MFD can be effectively conducted with the TEC treatment, by a minimum pulling-back operation to decrease the increment diameter. Accordingly, the splicing loss in the fusion-splicing of multiple fiber s having different MFDs can be made not more than 0.1 dB, which is equivalent to that which is desirable for the splicing loss of SMFs. Further, the splicing portion whose diameter increment thus having been reduced can be housed in an ordinary optical connector ferrule.

The above-mentioned is an explanation of splicing optical fibers having different MFDs; however, this invention is also effective for splicing optical fibers each of which having a small MFD. This invention is also applicable to the fusion-splicing of single optical fibers instead of the multi- fiber ribbon 11.

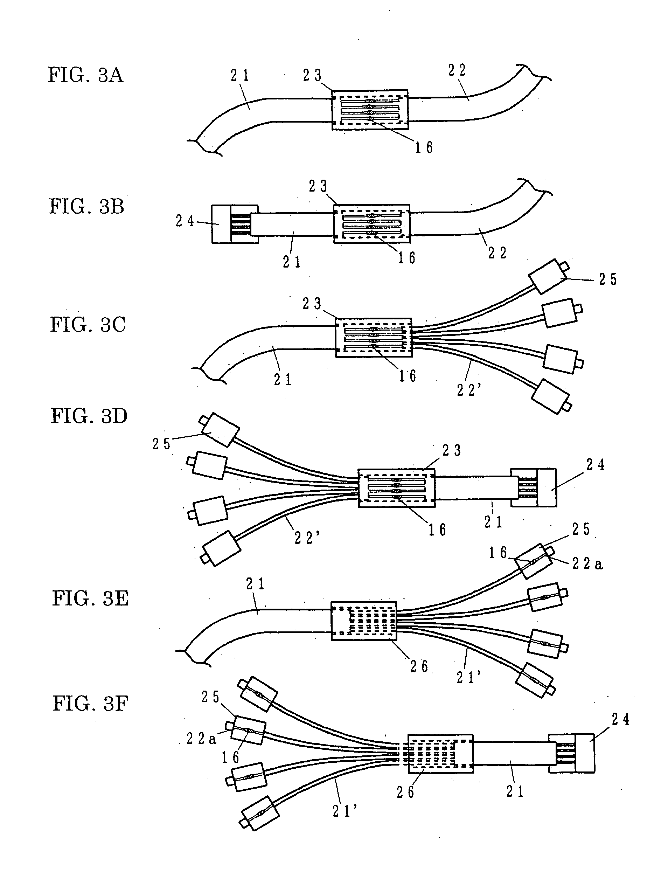

Figures 3A to 3F are examples of multi-fiber component incorporating fibers fusion spliced in accordance with the splicing method mentioned above. The optical fiber component shown in Fig. 3A consists of a fiber ribbon 21 including optical fibers having a smaller MFD and a fiber ribbon 22 including optical fibers having an ordinary MFD, whose different MFDs have been matched by the TEC treatment applied to a fusion-spliced portion 16, after the fusion-splicing operation of both fiber ribbons en bloc. The fusion-spliced portion 16 is subjected to the TEC treatment after the fusion splicing has been made by the pushing operation and the pulling back operation to decrease the diameter increment, as previously mentioned. It is desirable that the diameter increment of the fusion-spliced portion be not more than 11 µm and more desirably not more than 5 µm. Further, it is desirably not less than -20 µm, and more desirably not less than -6 µm.

The fusion-spliced portion 16 is mechanically protected and reinforced by a protection sleeve 23. The splicing loss of the spliced portion in this structure can be made not more than 0.1 dB which is equivalent to that of SMFs.

The multi-fiber unit 21 consists of optical fibers each having, for example, an approximately 5 µm MFD, which are disposed in parallel in line in the form of a ribbon, or stranded and housed in a tube. The multi-fiber unit 22 consists of optical fibers each having, for example, an approximately 10 µm MFD, which are disposed in parallel in line in the form of a ribbon, or stranded and housed in a tube.

Figure 3B shows an optical fiber component in which a multi-fiber connector 24 is attached to the multi-fiber ribbon 21 in the configuration of Fig. 3A. This optical fiber component enables easy connection between planar optical waveguides having small MFDs and SMFs.

Figure 3C is an optical fiber component comprising a plurality of fibers 22' (instead of the multi-fiber unit 22 shown in Fig. 3A), to which a plurality of single=fiber connectors 25 are attached, respectively. This optical fiber component enables connecting the multi-fiber unit 21, each fiber of which has a 5 µm MFD, pluggably to an optical transmission line consisting of SMFs by means of the single-fiber connectors 25. A multi-fiber connector can be used instead of the single optical fiber connectors.

Figure 3D shows a component consisting of a combination of the structures shown in Figs. 3B and 3C; that is, the optical fiber component consists of an optical fiber ribbon 21, each fiber of which has a 5 µm MFD and to which a multi-fiber connector 24 is attached, and a plurality of fibers 22' to which the single-fiber connectors 25 are attached. This optical component can be used for pluggably connecting planar optical waveguides having a small MFD to an optical transmission line consisting of SMFs by means of optical connectors 25.

Figure 3E is an optical fiber component consisting of a fiber ribbon 21 separated into discrete fibers 21' which have a 5 μm MFD and which are individually fusion-spliced to optical fibers 22a each having a 10 μm MFD and whose fusion spliced portions 16 are housed individually in single-fiber connectors 25. The fusion-spliced portions 16 are formed by the method similar to the example described with reference to Fig. 3A. A branched portion of the fiber ribbon 21 is supported by a branch sleeve 26 to maintain the branched position. This optical fiber component can be used for connecting an optical transmission line consisting of SMFs to the optical fiber ribbon 21 consisting of optical fibers having a 5 μm MFD, by using the optical connectors 25, which are pluggable. A multi-fiber optical connector can be used also in place of the single-fiber connectors 25.

Figure 3F is an optical fiber component consisting of an optical fiber ribbon 21 to which a multi-fiber connector 24 is attached on the unbranched side thereof in the configuration of Fig. 3E. This enables easy pluggable connection by means of the connectors 25, between planar optical waveguides each having a MFD of 5 μm and an optical transmission line consisting of SMFs.

In the optical fiber components described in Figs. 3C to 3F, the optical fiber ribbon 21 consisting of optical fibers having an MFD of 5 μm can be replaced by an optical fiber ribbon 22 consisting of SMFs, and the optical fibers 22a or fibers 22' can be replaced by the fibers having an MFD of 5 μm.

The entire disclosure of Japanese Patent Application No. 2002-80075 filed on March 22, 2002 including specification, claims drawings and summary are incorporated herein by reference in its entirety.

**Claims**

1.  A method of splicing one or more pairs of optical fibers whose mode field diameters (MFDs) are different from each other, the method comprising the steps of:

    disposing said one or more pairs of optical fibers to oppose each other, the end portions thereof to be spliced being aligned;

    performing fusion-splicing while pushing one or both of said pairs of fibers toward the others so as to abut one another during said fusion-splicing;

    pulling back fusion-spliced fibers in the opposite direction to decrease diameter increment created in fusion-spliced portions; and

    applying additional heat treatment to said fusion-spliced portions such that a dopant contained in the core portions of said fibers is thermally diffused so as to cause the MFDs thereof to match each other.

2.  A method of splicing optical fibers according to Claim 1, wherein the diameter increment after said additional heat treatment has been applied to the fusion-spliced portions is not more than 11 μm.

3.  A method of splicing optical fibers according to Claim 1, wherein the diameter increment after said additional heat treatment has been applied to the fusion-spliced portions is not more than 5 μm.

4.  A method of splicing optical fibers according to any one of Claims 1 to 3, wherein the diameter increment after said additional heat treatment has been applied to the fusion-spliced portions is not less than -20 μm.

5.  A method of splicing optical fibers according to any one of Claims 1 to 3, wherein the diameter increment after said additional heat treatment has been applied to the fusion-spliced portions is not less than -6 μm.

6.  A multi-fiber component comprising the optical fibers having different MFDs and spliced according to the method as set forth in claim 1, wherein the diameter increment after the additional heat treatment has been applied to the spliced portions is not more than 11 μm.

7.  A multi-fiber component according to Claim 6, wherein the diameter increment is not more than 5 μm.

8.  A multi-fiber component according to Claim 6 or 7, wherein the diameter increment is not more than -20 μm.

9.  A multi-fiber component according to Claim 6 or 7, wherein the diameter increment is not more than -6 μm.

**10.** A method of splicing one or more pairs of optical fibers, the method comprising the steps of:

disposing said one or more pairs of optical fibers to oppose each other, the end portions thereof to be spliced being aligned;

performing fusion-splicing while pushing one or both of said pairs of fibers toward the others so as to abut one another during said fusion-splicing;

pulling back fusion-spliced fibers in the opposite direction to decrease diameter increment created in fusion-spliced portions; and

applying additional heat treatment to said fusion-spliced portions such that a dopant contained in the core portions of said fibers is thermally diffused so as to cause the MFDs thereof to match each other.

FIG. 1A1

FIG. 1A2

FIG. 1B1

FIG. 1B2

FIG. 1C1

FIG. 1C2

FIG. 1D1

FIG. 1D2

FIG. 2A

FIG. 2B

FIG. 2C

FIG. 3A

FIG. 3B

FIG. 3C

FIG. 3D

FIG. 3E

FIG. 3F

FIG. 4A
PRIOR ART

FIG. 4B
PRIOR ART

FIG. 4C
PRIOR ART

FIG. 5A
PRIOR ART

FIG. 5B
PRIOR ART

FIG. 5D
PRIOR ART

FIG. 5C
PRIOR ART

FIG. 6A
PRIOR ART

FIG. 6B
PRIOR ART